(19) Europäisches Patentamt
European Patent Office
Office européen des brevets

(11) **EP 3 490 130 B1**

(12) **EUROPÄISCHE PATENTSCHRIFT**

(45) Veröffentlichungstag und Bekanntmachung des Hinweises auf die Patenterteilung:
**12.08.2020 Patentblatt 2020/33**

(51) Int Cl.:
***H02M 3/155*** *(2006.01)*     ***H02P 7/282*** *(2016.01)*

(21) Anmeldenummer: **18203360.5**

(22) Anmeldetag: **30.10.2018**

(54) **VERFAHREN ZUR STEUERUNG EINER AN EINEM ELEKTRISCHEN LÜFTER ANLIEGENDEN SPANNUNG**

METHOD FOR CONTROLLING A VOLTAGE APPLIED TO AN ELECTRIC FAN

PROCÉDÉ DE COMMANDE D'UNE TENSION APPLIQUÉE À UN VENTILATEUR ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.11.2017 DE 102017221172**

(43) Veröffentlichungstag der Anmeldung:
**29.05.2019 Patentblatt 2019/22**

(73) Patentinhaber: **Siemens Aktiengesellschaft 80333 München (DE)**

(72) Erfinder:
• **Hertz, Dirk 92260 Fichtenhof (DE)**
• **Ringer, Florian 92249 Vilseck (DE)**
• **Schönenberg, Marco 92224 Amberg (DE)**

(56) Entgegenhaltungen:
**AT-A4- 507 203**     **DE-A1- 10 346 535**
**US-B1- 6 979 964**

**Beschreibung**

Die vorliegende Erfindung betrifft ein Verfahren zur Steuerung einer an einem elektrischen Lüfter anliegenden Spannung. Ebenso betrifft die Erfindung ein Computerprogrammprodukt, mit dem das Betriebsverfahren durchführbar ist. Gleichermaßen betrifft die Erfindung eine entsprechende Schaltungsanordnung. Die Erfindung betrifft auch ein Gerät, das dazu ausgebildet ist, das Betriebsverfahren umzusetzen.

Es ist bekannt, elektronische Schaltgeräte wie Sanftstarter und Stromrichter zur Kühlung der Leistungselektronik mit elektrisch betriebenen Lüftern auszurüsten, um eine Überhitzung der Halbleiter zu vermeiden und/oder die Leistungsfähigkeit des Gerätes zu erhöhen. Zum Beispiel beschreibt DE 10 2004 017292 A1 (Siemens AG) 20.10.2005 einen Lüfter zur aktiven Kühlung eines Sanftstarters.

Viele andersartige Geräte, z. B. Projektoren, Audiogeräte, Kühlgeräte, verwenden ebenfalls elektrisch betriebene Lüfter zum Abführen der Verlustleistung. Im Folgenden wird für die verschiedenen Arten von zu kühlenden Geräten allgemein der Begriff Gerät verwendet.

US 6 979 964 offenbart eine Steuerung eines Lüfters mittels PWM. Der Lüfter wird mit Bezug auf eine Temperatur gesteuert.

Falls ein Netzteil, das der Spannungsversorgung des Geräts dient, zugleich auch der Spannungsversorgung des elektrischen Lüftermotor dienen soll, muss wegen des Anlaufstroms des Lüftermotors, der ein Vielfaches des später fließenden Nennstromes beträgt, das Netzteil relativ groß dimensioniert werden.

Der vorliegenden Erfindung liegt die Aufgabe zugrunde, ein verbessertes Verfahren zum Betreiben eines Gerätelüfters anzugeben. Der vorliegenden Erfindung liegt außerdem die Aufgabe zugrunde, eine verbesserte Schaltanordnung zum Betreiben eines Gerätelüfters anzugeben.

Die Aufgabe wird erfindungsgemäß gelöst durch ein Verfahren zur Steuerung einer an einem elektrischen Lüfter anliegenden Spannung während eines Anlaufs des Lüfters. Der Lüfter dient dabei der Erzeugung eines ein Gerät kühlenden Luftstroms. Das Verfahren umfasst ein Anlegen einer Ausgangsspannung eines Netzteils an den Lüfter, wobei das Netzteil außerdem einer Spannungsversorgung des Geräts dient. Das Verfahren umfasst außerdem ein Ein- und Ausschalten der an den Lüfter angelegten Ausgangsspannung des Netzteils durch einen mittels einer Steuerungseinheit pulsweitenmoduliert gesteuerten Schalter so, dass der Effektivwert des durch den Lüfter fließenden Stroms geringer als ein Anlaufstrom des Lüfters ist. Die Aufgabe wird ferner gelöst durch eine Schaltungsanordnung zur Stromversorgung eines elektrischen Lüfters. Der Lüfter dient der Erzeugung eines ein Gerät kühlenden Luftstroms. Die Schaltungsanordnung umfasst elektrische Kontakte zum Verbinden des Lüfters mit einem Netzteil, welches der Spannungsversorgung des Gerätes dient. Die Schaltungsanordnung umfasst außerdem einen mit dem Lüfter in Reihe geschalteten Schalter zum Ein- und Ausschalten des durch den Lüfter fließenden Lüfterstroms, wobei der Schalter mittels eines pulsbreitenmodulierten Stellsignals wechselweise geöffnet und geschlossen werden kann. Die Schaltungsanordnung umfasst auch eine Steuerungseinheit zur Bereitstellung eines pulsbreitenmodulierten Stellsignals am Schalter so, dass der Effektivwert des durch den Lüfter fließenden Stroms geringer als ein Anlaufstrom des Lüfters ist.

Unter dem Effektivwert versteht man, wie in der Elektrotechnik üblich, den quadratischen Mittelwert des pulsbreitenmodulierten Stromwerts, welcher eine zeitlich veränderliche physikalische Größe darstellt. In der englischen Sprache wird der Effektivwert mit RMS (= Root Mean Square) bezeichnet.

Der Schalter kann als ein Schaltelement oder Schaltglied, z.B. als ein Transistor, auch Schalttransistor genannt, ausgebildet sein.

Der elektrisch betriebene Lüfter, oder kurz: elektrische Lüfter, weist einen Rotor, z. B. mehrere an einer drehbaren Achse befestigte Lüfterflügel, und einen elektrischen Motor zum Antreiben des Rotors auf. Der elektrische Motor des Lüfters wird durch Anlegen einer elektrischen Spannung betrieben. Der verkürzende Ausdruck »Anlegen einer Spannung an den Lüfter" bedeutet, dass eine elektrische Spannung an den Elektromotor des Lüfters gelegt wird. Der Lüfterstrom ist ein durch einen Lüftermotor, d.h. einen elektrischen Motor des Lüfters, genauer: z. B. durch Leitungswicklungen des Lüftermotors, fließender Strom, der nach Anlegen einer Spannung an den Lüftermotor fließt. Der elektrische Lüfter erzeugt einen Luftstrom zur Kühlung eines Gerätes, insbesondere der Elektronik eines elektronischen Schaltgeräts wie Sanftstarter, Frequenzumrichter, Wechselrichter. Die Elektronik ist dabei vorzugsweise eine Steuerelektronik, welche Schaltglieder des Schaltgeräts steuern kann. Dadurch soll eine Überhitzung der Halbleiter vermieden und die Leistungsfähigkeit des Gerätes erhöht werden. Dabei werden sowohl der Lüfter als auch das zu kühlende Gerät, insbesondere eine Steuerelektronik des Geräts, von demselben Netzteil mit Spannung versorgt. Der Lüfter ist vorzugsweise in das Gerät integriert.

Das erfindungsgemäße Verfahren dient dazu, die an dem elektrischen Motor des Lüfters anliegenden Spannung während eines Anlaufs des Lüfters, d. h. während einer Erhöhung der Drehzahl des Lüftermotors, insbesondere aus dem Stillstand, zu steuern. Diese Steuerung ist von Bedeutung, weil Lüftermotoren während ihres Anlaufs ein Vielfaches der Leistung bei Dauerbetrieb, z. B. etwa die dreifache Leistung, aufnehmen können.

Durch ein wechselweises Ein- und Ausschalten der an den Lüfter angelegten Ausgangsspannung des Netzteils mithilfe eines Schalters, der durch eine Steuerungseinheit pulsweitenmoduliert gesteuert wird, wird die am Lüftermotor anliegende Spannung und somit auch der den Lüftermotor durchfließende Strom so geregelt, dass der Effektivwert des durch den Lüfter fließenden Stroms kleiner oder gleich einem Nennstrom des Lüfters ist.

Der Erfindung liegt die Erkenntnis zugrunde, dass es möglich ist, ein Netzteil, welches einer Spannungsversorgung eines durch einen Lüfter gekühlten Geräts dient, gleichzeitig auch zur Spannungsversorgung des Lüfters selbst zu verwenden, ohne dass das Netzteil um die Anlaufleistung des Lüfters größer ausgelegt werden muss. Durch eine Begrenzung der Leistungsaufnahme des Lüfters, insbesondere während dessen Anlauf, reicht es stattdessen aus, das Netzteil so zu dimensionieren, dass es die Dauerbetriebsleistung des Geräts plus die Nennbetriebsleistung des Lüfters abdeckt. Somit muss das Netzteil, zusätzlich zu der Dimensionierung für den Dauerstrom des Geräts, nur für maximal den Nennstrom des Lüfters, aber nicht für den Anlaufstrom des Lüfters, dimensioniert werden.

Die Spannungsversorgung des Lüfters über ein Netzteil, insbesondere ein Weitbereichsnetzteil, welches über einen weiten Versorgungsspannungsbereich, z.B. 110 V (- 15 %) bis 240 V (+ 10 %), die Steuerelektronik des Gerätes versorgt, hat für den Kunden den Vorteil der geringeren Varianz, was auch für den Hersteller deutliche Vorteile in der Fertigung, Lagerhaltung und bei den Kosten bietet. Aus diesem Grund ist es naheliegend, den oder die Lüfter des Gerätes aus der geregelten Ausgangsspannung des Weitbereichsnetzteils und nicht direkt aus der Versorgungsspannung des Gerätes zu versorgen. Dies bietet zusätzlich den Vorteil, dass der zu erwartende Luftstrom des Lüfters nicht durch Versorgungsspannungsschwankungen beeinflusst wird.

Viele Geräte benötigen für die Steuerelektronik nur eine sehr geringe Leistung, weshalb das Netzteil auch sehr klein ausgelegt werden kann. Bisher ist es aber so, dass die Lüfterleistung hier erheblich die Auslegung des Netzteils beeinflussen kann: besonders wenn auch die Anlaufleistung des Lüfters berücksichtigt werden muss - Lüfter können während des Anlaufs etwa die dreifache Leistung aufnehmen gegenüber dem Dauerbetrieb - kann es sein, dass das Netzteil deutlich größer und teurer dimensioniert werden muss. Diese Anlaufzeit kann bis zum Erreichen der vollen Drehzahl abhängig vom Lüfter einige Sekunden dauern; für diese Zeit musste bislang das Netzteil des Gerätes die erhöhte Leistung des Lüfters zur Verfügung stellen.

Die vorliegende Erfindung schafft nun eine Möglichkeit, dass der Lüfter am Netzteil des Geräts betrieben wird, aber trotzdem das Netzteil nicht um die Anlaufleistung des Lüfters größer ausgelegt werden muss. Durch die Erfindung sind Einsparungen an den Netzteilen von Geräten erreichbar, die einen Lüfter integriert haben und diesen über das der Spannungsversorgung des Gerätes dienende Netzteil mit Spannung mitversorgen. Durch die Erfindung muss das Netzteil, zusätzlich zu der Dimensionierung für den Dauerstrom des Geräts, nur für einen Nennstrom des Lüfters, aber nicht für den Anlaufstrom des Lüfters, dimensioniert werden. Das spart Kosten und Bauraum.

Vorteilhafte Ausgestaltungen und Weiterbildungen der Erfindung sind in den abhängigen Ansprüchen angegeben. Dabei kann das erfindungsgemäße Verfahren auch entsprechend den abhängigen Vorrichtungsansprüchen weitergebildet sein, und umgekehrt.

Gemäß einer bevorzugten Ausgestaltung der Erfindung ist ein Maximalwert des durch den Lüfter fließenden Stroms kleiner oder gleich dem Zweifachen eines Nennstroms des Lüfters. Somit kann das Netzteil, zusätzlich zu der Dimensionierung für den Dauerstrom des Geräts, kleiner als bisher dimensioniert werden.

Gemäß der Erfindung umfasst das Verfahren die Schritte: Erfassen einer am Lüfter anliegenden Lüfterspannung; und Berechnung der Ein- und Ausschaltzeiten der an den Lüfter angelegten Ausgangsspannung des Netzteils als Funktion der erfassten Lüfterspannung. Die Lüfterspannung ist die am Lüftermotor anliegende elektrische Spannung. Dabei können die Einschaltzeit $t\_EIN$ und Ausschaltzeit $t\_AUS$ nach folgenden Formeln berechnet werden:

$$(\text{Eq. 1}) \quad t\_EIN = (2 \cdot I\_n \cdot L\_D)/U\_L$$

$$(\text{Eq. 2}) \quad t\_AUS = (2 \cdot I\_n \cdot L\_D)/(U\_S + U\_D - U\_L)$$

mit

$I\_n$ = Nennstrom des Lüfters
$L\_D$ = Induktivität der Drossel
$U\_S$ = Ausgangsspannung des Netzteils
$U\_L$ = Lüfterspannung
$U\_D$ = Flussspannung Freilaufdiode

Im Stand der Technik muss man, will man den Strom regeln, entweder den ungeglätteten dreieckförmigen Strom mit einer hohen Abtastrate erfassen und den Mittelwert berechnen, was eine relativ hohe Rechenleistung benötigt, oder den Strom mit einer relativ großen Drossel glätten, was einen relativ hohen Platzbedarf und deutlich höhere Kosten bedeutet. Hier liegt der Vorteil der Erfindung: es wird nicht der Strom geregelt, sondern eingestellt. Dazu ist lediglich ein Erfassen einer am Lüfter anliegenden Lüfterspannung und eine Berechnung der Ein- und Ausschaltzeiten der an den Lüfter angelegten Ausgangsspannung des Netzteils als Funktion der erfassten Lüfterspannung notwendig. Mit der vorliegenden Erfindung wird dazu weder eine relativ große Drossel, um den Strom zu glätten, noch eine große Rechenleistung, um den ungeglätteten Strom abzutasten und zu verarbeiten, benötigt. Die Spannung am Lüfter braucht nur gelegentlich gemessen zu werden. Die Berechnung der Ein- und Ausschaltzeit nach den Gleichungen Eq. 1 und Eq. 2 erfolgt deutlich seltener als das Schalten des Schalters. Die einzige variable Eingangsgröße der Funktion zum Konstanthalten des Stromes ist die relativ selten gemessene Lüfterspannung.

Gemäß einer bevorzugten Ausgestaltung der Erfindung umfasst das Verfahren den Schritt: Anschließen eines Kondensators parallel zu dem Lüfter. Gemäß einer bevorzugten Ausgestaltung der Erfindung umfasst die Schaltungsanordnung einen parallel zu dem Lüfter geschalteten Kondensator. Von Vorteil dabei ist, dass der Kondensator die Lüfterspannung stabilisiert.

Gemäß einer bevorzugten Ausgestaltung der Erfindung umfasst das Verfahren den Schritt: Anschließen einer einen Stromanstieg begrenzenden Drossel so, dass der durch den Lüfter fließende Lüfterstrom auch durch die Drossel und den Schalter fließt. Gemäß einer bevorzugten Ausgestaltung der Erfindung umfasst die Schaltungsanordnung eine in Reihe mit dem Lüfter geschaltete Drossel zur Begrenzung eines Stromanstiegs. Von Vorteil dabei ist, dass die Drossel den Stromanstieg begrenzt. Bei der pulsweitenmodulierten Steuerung des Schalters sind hohe Schaltfrequenzen vorteilhaft, weil die einen Stromanstieg begrenzende und/oder den Stromverlauf glättende Drossel desto kleiner ausgelegt werden kann, je größer die Schaltfrequenz ist.

Im Stand der Technik muss man, will man den Strom regeln, entweder den ungeglätteten dreieckförmigen Strom mit einer hohen Abtastrate erfassen und den Mittelwert berechnen, was eine relativ hohe Rechenleistung benötigt, oder den Strom mit einer relativ großen Drossel glätten, was einen relativ hohen Platzbedarf und deutlich höhere Kosten bedeutet. Hier liegt der Vorteil der bevorzugten Ausgestaltung der Erfindung: es wird nicht den Strom geregelt, sondern eingestellt. Dazu ist lediglich ein Erfassen einer am Lüfter anliegenden Lüfterspannung und eine Berechnung der Ein- und Ausschaltzeiten der an den Lüfter angelegten Ausgangsspannung des Netzteils als Funktion der erfassten Lüfterspannung notwendig. Mit der vorliegenden Erfindung wird dazu weder eine größere Drossel, um den Strom zu glätten, noch eine große Rechenleistung, um den ungeglätteten Strom abzutasten und zu verarbeiten, benötigt. Gemäß einer bevorzugten Ausgestaltung der Erfindung wird die Spannung am Lüfter durch den Kondensator geglättet und braucht nur gelegentlich gemessen zu werden. Die Berechnung der Ein- und Ausschaltzeit nach den Gleichungen Eq. 1 und Eq. 2 erfolgt deutlich seltener als das Schalten des Schalters. Die einzige variable Eingangsgröße der Funktion zum Konstanthalten des Stromes ist die relativ selten gemessene Lüfterspannung.

Gemäß einer bevorzugten Ausgestaltung der Erfindung umfasst das Verfahren den Schritt: Anschließen eines Strommessshunts so, dass der durch den Lüfter fließende Lüfterstrom auch durch den Strommessshunt fließt. Gemäß einer bevorzugten Ausgestaltung der Erfindung umfasst die Schaltungsanordnung einen in Reihe mit dem Lüfter geschalteten Strommessshunt.

Die einfache Erweiterung der Schaltung um einen Shunt bietet die Möglichkeit, zusätzliche Vorteile der Schaltung zu nutzen. Dazu wird die Spannung am Shunt von der Steuerung zusätzlich erfasst und ausgewertet. Damit ist auch im Dauerbetrieb des Lüfters dessen Stromaufnahme bekannt und es kann, z. B. eine Kurzschluss-Überwachung, eine Schwergängigkeits-Überwachung durchgeführt werden. Auch eine Lüfterstrombegrenzung unter Nennstrom des Lüfters, z.B. für Teillastbetrieb oder zum Energiesparen ist denkbar.

Von Vorteil dabei ist, dass die Möglichkeit für vielfältige Funktionen geschaffen, die durch Kenntnis des Lüfterstroms realisiert werden können. Es kann z.B. bei einem Kurzschluss am Lüfter oder an dessen Zuleitung der Strom begrenzt werden, und somit kann der Rest des Gerätes weiter betrieben werden, was die Anlagenverfügbarkeit erhöht. Wird über die Strommessung am Strommessshunt erkannt, dass der Lüfter schwergängig oder blockiert ist, kann der Gerätebetreiber gewarnt werden. Zusätzlich ist auch eine Strombegrenzung im Dauerbetrieb realisierbar, um den Luftstrom zu regulieren oder Energie zu sparen.

Die skizzierte Aufgabenstellung wird auch durch ein erfindungsgemäßes Computerprogrammprodukt gelöst. Das Computerprogrammprodukt ist in einer Steuerungseinheit ausführbar ausgebildet. Das Computerprogrammprodukt kann als Software oder Firmware in einem Speicher speicherbar und durch ein Rechenwerk ausführbar ausgebildet sein. Alternativ oder ergänzend kann das Computerprogrammprodukt auch zumindest teilweise als festverdrahtete Schaltung ausgebildet sein, beispielsweise als ASIC (= application-specific integrated circuit). Das Computerprogrammprodukt ist dazu ausgebildet, Messwerte zu empfangen, auszuwerten und Befehle an Komponenten einer Schaltungsanordnung zu erzeugen. Erfindungsgemäß ist das Computerprogrammprodukt dazu ausgebildet, mindestens eine Ausführungsform des skizzierten Verfahrens zur Steuerung einer an einem elektrischen Lüfter anliegenden Spannung während eines Anlaufs des Lüfters umzusetzen und durchzuführen. Dabei kann das Computerprogrammprodukt sämtliche Teilfunktionen des Verfahrens in sich vereinigen, also monolithisch ausgebildet sein. Alternativ kann das Computerprogrammprodukt auch segmentiert ausgebildet sein und jeweils Teilfunktionen auf Segmente verteilen, die auf separater Hardware ausgeführt werden. Beispielsweise kann ein Teil des Steuerungsverfahrens in einem Gerät, z. B. einem Schaltgerät, durchgeführt werden und ein anderer Teil des Steuerungsverfahrens in einer übergeordneten Steuerungseinheit, wie beispielsweise einer SPS (= Speicherprogrammierbare Steuerung), einem Handparametriergerät oder einer Computer-Cloud.

Gemäß einer bevorzugten Ausgestaltung der Erfindung umfasst die Schaltungsanordnung eine Freilaufdiode, die so geschaltet ist, dass bei geöffnetem Schalter die Drossel den Strom über die Freilaufdiode, einen parallel zum Lüfter geschalteten Kondensator und/oder den Lüfter weitertreiben kann. Bei dem Lüftermotor, d.h. einer induktiven Last, ist nämlich darauf zu achten, dass bei geöffnetem Schalter der Strom weiterfließen kann. Dazu wird dem Lüftermotor eine Freilaufdiode parallel geschaltet. Ohne eine Freilaufdiode würden beim Öffnen des Schalters Spannungsspitzen durch die Induktionsspannung entstehen, die zusätzlich Probleme bereiten und die Schaltung sogar schädigen können. Von Vorteil ist dabei, dass die Freilaufdiode beim Abschalten der induktiven Gleichspannungslast des Elektromotors des Lüfters den Schalter, welcher vorzugsweise als ein Schalttransistor ausgebildet ist, vor einer Überspannung schützt. Dazu ist die Freilaufdiode derart parallel zum Elektromotor des Lüfters, d.h. zum induktiven Gleichstromverbraucher, geschaltet, dass sie von der Ausgangsspannung des Netzteils in Sperrrichtung beansprucht wird.

Die Aufgabe wird erfindungsgemäß außerdem gelöst durch ein Gerät mit einem elektrischen Lüfter und einem Netzteil. Bei dem Gerät handelt es sich vorzugsweise um ein Schaltgerät wie einen Sanftstarter oder Stromrichter. Es kann sich bei dem Gerät aber auch um ein elektrisches bzw. elektronisches Messgerät wie ein Oszilloskop oder um ein Konsumgut wie einen PC, einen TV oder einen Kaffeevollautomaten handeln. Dabei dient der darin eingesetzte elektrische Lüfter der Erzeugung eines das Gerät kühlenden Luftstroms. Und das Netzteil dient der Spannungsversorgung des Gerätes. Das Gerät umfasst eine Schaltungsanordnung nach einem der vorhergehenden Ansprüche. Dabei ist der Lüfter über die elektrischen Kontakte mit dem Netzteil verbunden.

Gemäß einer bevorzugten Ausgestaltung des Geräts ist die Ausgangsspannung des Netzteils eine Gleichspannung. Von Vorteil dabei ist, dass Gleichspannungslüfter betrieben werden können. Gleichspannungslüfter sind am Markt eher verfügbar als Lüfter für Wechselspannungsbetrieb, die Auswahl ist also größer.

Im Folgenden wird die Erfindung anhand mehrerer Ausführungsbeispiele unter Zuhilfenahme der beiliegenden Zeichnung erläutert. Es zeigen

Fig. 1    eine erste Schaltungsanordnung;
Fig. 2    eine weitere Schaltungsanordnung;
Fig. 3    ein Gerät; und
Fig. 4    ein Ablaufdiagramm einer Ausführungsform des beanspruchten Verfahrens.

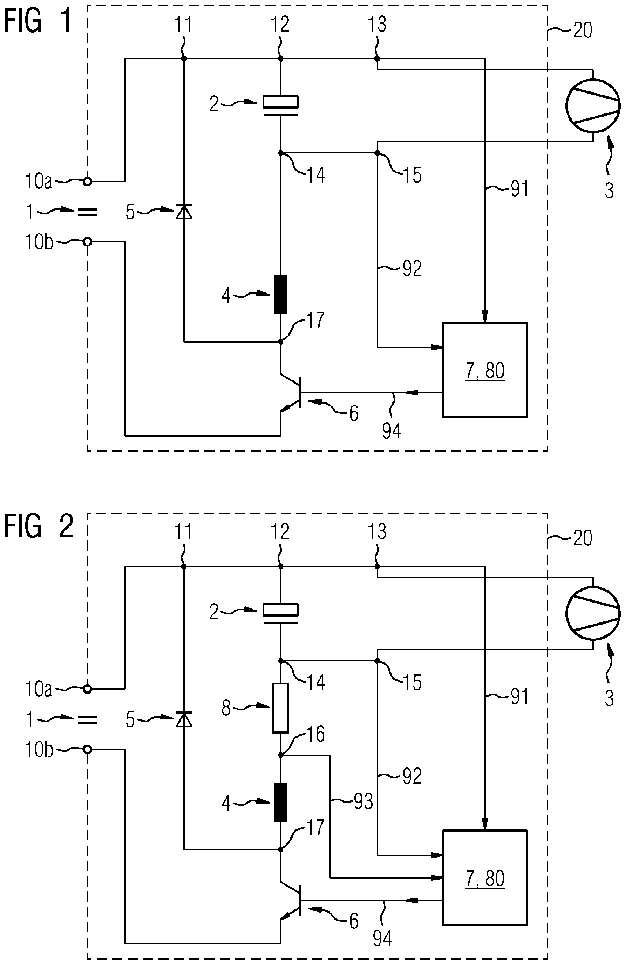

Fig. 1 zeigt eine erste Schaltungsanordnung 20. Ein eingangsseitig an ein nicht dargestelltes Versorgungs-Stromnetz, z. B. ein ein- oder mehrphasiges Wechselstromsystem, angeschlossenen Netzteil 1 stellt ausgangsseitig eine als Gleichspannung vorliegende Ausgangsspannung zur Verfügung. Die Ausgangsspannung des Netzteils 1 liegt an einem Gerät, insbesondere einer Elektronikschaltung des Geräts, an. Das Gerät kann als ein Schaltgerät wie z. B. einen Sanftstarter, insbesondere als ein elektronisches Schaltgerät, ausgebildet sein. Zugleich liegt über mit Anschlusspunkten des Netzteils 1 verbundene elektrische Kontakte 10a, 10b die Ausgangsspannung des Netzteils 1 auch an einem elektrisch betriebenen Lüfter 3 an, welcher vorzugsweise in das Gerät integriert ist. Der Lüfter 3 ist über zwei elektrische Knoten 12, 14 an die Schaltungsanordnung 20 angeschlossen. Der Lüfter 3 erzeugt einen Luftstrom zur Kühlung des Geräts, insbesondere von elektronischen Schaltelementen des Geräts.

Ein Kondensator 2 ist zwischen die zwei elektrischen Knoten 12, 14 und somit parallel zu dem Lüfter 3 geschaltet. Der Kondensator stabilisiert die Lüfterspannung. Eine Drossel 4, auch genannt: Drosselspule, ist zum Einen mit dem Lüfter und zum Anderen mit dem Kondensator in Reihe geschaltet. Drosseln (engl.: Choke) sind Spulen bzw. Induktivitäten zur Begrenzung von Strömen in elektrischen Leitungen, zur Zwischenspeicherung von Energie in Form ihres Magnetfeldes, zur Impedanzanpassung oder zur Filterung. Im Gegensatz zu Transformatoren oder Schwingkreis-Induktivitäten sind sie üblicherweise in Reihe zu anderen Bauteilen oder den Verbrauchern geschaltet.

Außerdem ist ein Schalter 6 zur Unterbrechung des Stroms mit der Drossel 4 in Reihe geschaltet. Bei geschlossenem Schalter 6 fließt Strom von dem Netzteil 1 über einen ersten Strompfad durch den Lüfter 3, die Drossel 4 und den Schalter 6 zurück zum Netzteil 1, und über einen zweiten Strompfad durch den Kondensator 2, die Drossel 4 und den Schalter 6 zurück zum Netzteil 1.

Parallel zum Lüfter 3 und der Drossel 4 ist eine Freilaufdiode 5 (engl.: flyback diode) geschaltet, die beim Abschalten der induktiven Gleichspannungslast des Elektromotors des Lüfters 3 zum Schutz vor einer Überspannung dient. Dazu ist die Freilaufdiode 5 derart parallel zum induktiven Gleichstromverbraucher des Lüfters 3 geschaltet, dass sie von der Ausgangsspannung des Netzteils 1 in Sperrrichtung beansprucht wird.

Eine am Lüfter 3 anliegende Spannung wird an zwei Messpunkten, einem ersten Messpunkt 13 und einem zweiten Messpunkt 15, abgegriffen und über eine erste Messleitung 91 und eine zweite Messleitung 92 an eine Steuerungseinheit 7 übertragen.

Durch die erfindungsgemäße Lüftersteuerung wird die am Lüfter 3 anliegende Spannung während dessen Anlaufs allmählich erhöht. Die Erhöhung der Spannung erfolgt so, dass auch während des Lüfteranlaufs der Effektivwert des durch den Lüftermotor fließenden Stroms kleiner oder gleich einem Nennstrom des Lüfters 3 ist.

Beispielsweise wird bei einem Nennstrom des Lüfters von 0,5 A und einem Anlaufstrom des Lüfters von 1,5 A der Effektivwert des durch den Lüfter fließenden Stroms auf 0,5 A begrenzt. Während der Einschaltzeit des Schalters 6 steigt der Lüfterstrom auf maximal den doppelten Nennstrom an; während der Ausschaltzeit des Schalters 6 klingt der Lüfterstrom vollständig ab. Im Mittel ergibt sich für den Lüfterstrom somit in etwa der Nennstrom, d.h. der Dauerbetriebsstrom, des Lüfters 3.

Die Versorgung der in Fig. 1 dargestellten Schaltungsanordnung erfolgt aus der Ausgangspannung des Netzteils 1, das auch für die Versorgung der restlichen Steuerelektronik des Gerätes vorgesehen ist. Üblicherweise ist diese Ausgangsspannung 1 eine Gleichspannung. Diese Versorgungsspannung 1 wird von der Steuerungseinheit 7, z. B. durch einen Mikrocontroller, gemessen.

Zum Anlauf des Lüfters 3 wird der Stromfluss über eine PWM-Steuerung der Steuerungseinheit 7, welche über eine Steuerleitung 94 an den Schalter 6 wechselweise Signale zum Öffnen und Schließen sendet, kontrolliert (PWM = pulsweitenmoduliert; Pulsweitenmodulation). Zur Berechnung der Ein- und Ausschaltzeiten der PWM erfasst die Steuerungseinheit 7 zusätzlich die am Lüfter 3 anliegende Lüfterspannung. Zur Stabilisierung dieser Spannung ist parallel zu dem Lüfter 3 der Kondensator 2 angeschlossen. Die Berechnung der Einschaltzeiten $t\_EIN$ und Ausschaltzeiten $t\_AUS$ der PWM, mit der der Schalter 6 gesteuert wird, erfolgt grob nach den Formeln der oben angegebenen Eq. 1 und Eq. 2.

Abhängig von der Lüfterspannung wird während des Lüferanlaufs die Pulsweitenmodulation, d. h. die Ein- und Ausschaltzeit des Schalters 6, von der Steuerungseinheit 7 angepasst, so dass der fließende Strom während des gesamten Anlaufs konstant bleibt. Während der Zeit t EIN fließt der Strom aus dem Netzteil 1 über den Kondensator 2 und/oder den Lüfter 3 sowie die Drossel 4 und den Schalter 6 zurück zum Netzteil 1. Die Drossel 4 begrenzt hierbei den Stromanstieg. Die Einschaltzeit ist entsprechend obiger Formel Eq. 1 so festgelegt, dass maximal der doppelte Wert des Lüfternennstromes erreicht wird.

Während der Einschaltzeit des vorzugsweise als ein Schalttransistor ausgebildeten Schalters 6 steigt der Strom auf maximal den doppelten Nennstrom an; während der Ausschaltzeit des Schalters 6 klingt der Strom vollständig ab. Im Mittel ergibt sich somit in etwa der Nennstrom, d.h. der Dauerbetriebsstrom, des Lüfters 3.

Danach beginnt für die Dauer $t\_AUS$ die Ausschaltphase des Schalters 6, während der die Drossel 4 den Strom über die Freilaufdiode 5 sowie den Kondensator 2 und/oder den Lüfter 3 weitertreibt. Die Ausschaltzeit wird entsprechend der zweiten Formel Eq. 2 berechnet, so dass der Strom bis zum nächsten Einschalten des Schalters 6 vollständig abgeklungen ist. Zur Sicherheit kann diese berechnete Ausschaltzeit dazu mithilfe eines Faktors geringfügig verlängert werden.

Im Mittel fließt durch diese Steuerung während des gesamten Anlaufs der in den Formeln Eq. 1 und Eq. 2 hinterlegte Nennstrom $I\_n$ des Lüfters 3.

Fig. 2 zeigt eine zweite Schaltungsanordnung 20, die mit der ersten, in Fig. 1 dargestellten Schaltungsanordnung übereinstimmt, aber zusätzlich einen Strommessshunt 8 aufweist. Durch einen Spannungsabgriff an einem zweiten Messpunkt 15 vor dem Shunt 8 und einem dritten Messpunkt 16 hinter dem Shunt 8 kann die am Shunt 8 abfallende Spannung abgegriffen und über eine zweite Messleitung 92 und eine dritte Messleitung 93 an die Steuerungseinheit 7 übertragen werden. Somit kann bei bekanntem Widerstand des Shunts 8 die am dritten Knoten 14 vorliegende Stromstärke errechnet werden.

Der Strommessshunt 8 ist für die Funktion der Schaltungsanordnung nicht erforderlich. Die einfache Erweiterung der Schaltungsanordnung um den Strommessshunt 8 bietet aber die Möglichkeit, zusätzliche Vorteile der Schaltung zu nutzen. Dazu wird die Spannung am Strommessshunt 8 von der Steuerungseinheit 7 zusätzlich erfasst. Damit ist auch im Dauerbetrieb des Lüfters 3 die Stromaufnahme des Lüfters 3 bekannt. Durch eine Auswertung der erfassten Strommesswerte kann die Steuerungseinheit 7 z.B. eine Kurzschluss-Überwachung oder eine Schwergängigkeits-Überwachung durchführen.

In ähnlicher Weise ist auch eine Lüfterstrombegrenzung unter Nennstrom des Lüfters 3, z.B. für einen Teillastbetrieb des Lüfters 3 oder zum Energiesparen, ist möglich.

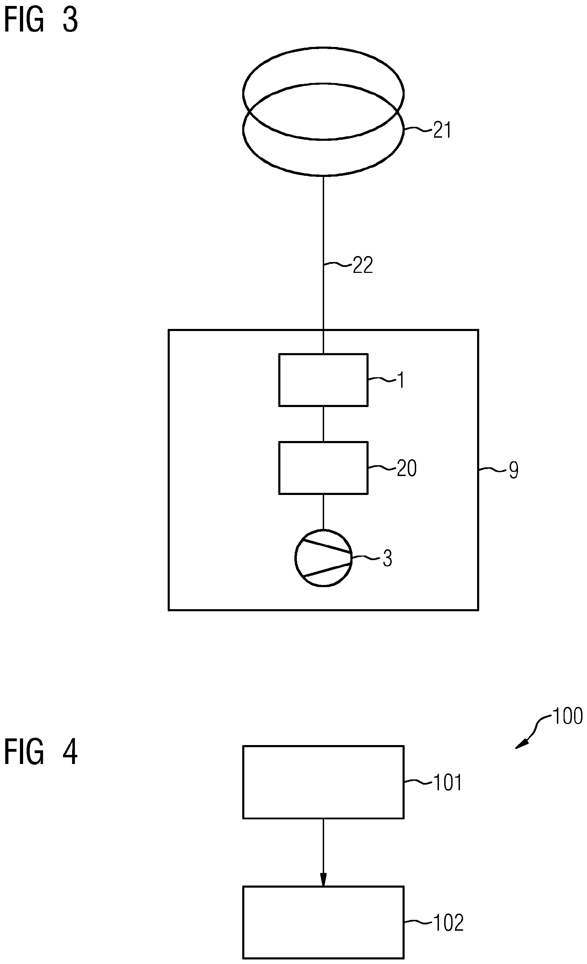

Fig. 3 zeigt ein Gerät 9, welches als ein Schaltgerät ausgebildet ist. Dabei weist das Schaltgerät in der Figur nicht dargestellte Schaltglieder auf, mittels derer eine Versorgungsspannung eines nicht dargestellten Verbrauchers, z.B. eines Elektromotors, die über einen sogenannten Hauptstromkreis geführt wird, geschaltet werden kann. Die über den Hauptstromkreis bereitgestellte Versorgungsspannung kann z. B. 380 V betragen.

Das Gerät 9 weist einen elektrischen Lüfter 3 auf, welcher der Erzeugung eines das Gerät 9 kühlenden Luftstroms dient. Der Luftstrom kann z.B. eine Elektronikschaltung des Geräts 9, insbesondere eine Steuerelektronikschaltung zur Steuerung der Schaltgliedern, kühlen. Das Gerät 9 weist außerdem ein Netzteil 1 auf, welches der Spannungsversorgung des Gerätes 9 dient, beispielsweise der Spannungsversorgung der Elektronikschaltung. Dabei ist das Netzteil 1 eingangsseitig über eine Stromleitung 22 in einen sogenannten Steuerstromkreis geschaltet, welcher das Netzteil 1 mit einer Steuerspannung aus einem elektrischen Netz 21, z. B. aus einem ein- oder mehrphasigen Wechselstromsystem, versorgt. Die über den Steuerstromkreis bereitgestellte Steuerspannung kann z. B. 230 V betragen. Das Netzteil 1 wandelt die im elektrischen Netz 21 bereit gestellte Steuerspannung so um, dass die Ausgangsspannung des Netzteils 1 eine Gleichspannung innerhalb eines definierten Spannungsbereiches ist, z.B. eine Gleichspannung von 24 V. Das Gerät 9 weist darüber hinaus eine Schaltungsanordnung 20 zur Stromversorgung des elektrischen Lüfters auf. Die Schaltungsanordnung 20 weist elektrische Kontakte auf, zum elektrischen Verbinden des Lüfters 3 mit dem Netzteil 1. Die Schaltungsanordnung 20 weist einen mit dem Lüfter 3 in Reihe geschalteten Schalter zum Ein- und Ausschalten des durch den Lüfter 3 fließenden Lüfterstroms auf, wobei der Schalter mittels eines pulsbreitenmodulierten Stellsignals wechselweise geöffnet und geschlossen werden kann. Die Schaltungsanordnung 20 weist außerdem eine Steuerungseinheit zur Bereitstellung eines pulsbreitenmodulierten Stellsignals am Schalter auf, so dass im Mittel nur der Dauerbetriebsstrom des Lüfters 3 durch den Lüfter 3 fließt.

Fig. 4 zeigt ein erfindungsgemäßes Verfahren 100 zur Steuerung einer an einem elektrischen Lüfter anliegenden Spannung während eines Anlaufs des Lüfters, wobei der Lüfter zur Erzeugung eines ein Gerät kühlenden Luftstroms dient. Das Verfahren 100 umfassend folgende Schritte: In einem ersten Schritt 101 wird eine Ausgangsspannung eines Netzteils, welches zur Spannungsversorgung des Geräts dient, an den Lüfter angelegt. In einem nachfolgenden Schritt 102 wird die am Lüfter anliegende Ausgangsspannung des Netzteils durch einen mittels einer Steuerungseinheit pulsweitenmoduliert gesteuerten Schalter so ein- und ausgeschaltet, dass der Lüfter mit einem Dauerbetriebsstrom des Lüfters betrieben wird.

**Patentansprüche**

1.  Verfahren (100) zur Steuerung einer an einem elektrischen Lüfter (3) anliegenden Spannung ($U_L$) während eines Anlaufs des Lüfters (3), wobei der Lüfter (3) zur Erzeugung eines ein Gerät (9) kühlenden Luftstroms dient, umfassend folgende Schritte:

    - Anlegen (101) einer Ausgangsspannung (Us) eines Netzteils (1), welches zur Spannungsversorgung des Geräts (9) dient, an den Lüfter (3); und
    - Ein- und Ausschalten (102) der an den Lüfter (3) angelegten Ausgangsspannung (Us) des Netzteils (1) durch einen mittels einer Steuerungseinheit (7) pulsweitenmoduliert gesteuerten Schalter (6),

    **gekennzeichnet durch** folgende Schritte:

    - Erfassen einer am Lüfter (3) anliegenden Lüfterspannung ($U_L$) ; und
    - Berechnung der Einschaltzeiten ($t_{EIN}$) und Ausschaltzeiten ($t_{AUS}$) der an den Lüfter (3) angelegten Ausgangsspannung (Us) des Netzteils (1) als Funktion der erfassten Lüfterspannung ($U_L$) so, dass der Effektivwert des **durch** den Lüfter (3) fließenden Stroms kleiner oder gleich einem Nennstrom ($I_n$) des Lüfters (3) ist.

2.  Verfahren nach Anspruch 1, wobei ein Maximalwert des durch den Lüfter (3) fließenden Stroms kleiner oder gleich dem Zweifachen des Nennstroms ($I_n$) des Lüfters (3) ist.

3.  Verfahren nach einem der vorhergehenden Ansprüche, umfassend:

    - Anschließen eines Kondensators (2) parallel zu dem Lüfter (3) zur Stabilisierung der Lüfterspannung ($U_L$).

4.  Verfahren nach einem der vorhergehenden Ansprüche, umfassend:

    - Anschließen einer einen Stromanstieg begrenzenden Drossel (4) so, dass der durch den Lüfter (3) fließende Lüfterstrom auch durch die Drossel (4) und den geschlossenen Schalter (6) fließt.

5.  Verfahren nach einem der vorhergehenden Ansprüche, umfassend:

    - Anschließen eines Strommessshunts (8) so, dass der durch den Lüfter (3) fließende Lüfterstrom auch durch den Strommessshunt (8) fließt.

6.  Computerprogrammprodukt (80), das in einer Steuerungseinheit (7) ausführbar ist, **dadurch gekennzeichnet, dass** das Computerprogrammprodukt (80) zur Durchführung eines Verfahrens nach einem der Ansprüche 1 bis 5 ausgebildet ist.

7.  Schaltungsanordnung (20) zur Stromversorgung eines elektrischen Lüfters (3), welcher zur Erzeugung eines ein Gerät (9) kühlenden Luftstroms dient, umfassend

- elektrische Kontakte (10a, 10b) zum Verbinden des Lüfters (3) mit einem Netzteil (1), welches der Spannungsversorgung des Geräts (9) dient,
- einen mit dem Lüfter (3) in Reihe geschalteten Schalter (6) zum Ein- und Ausschalten des durch den Lüfter (3) fließenden Lüfterstroms, wobei der Schalter (6) mittels eines pulsbreitenmodulierten Stellsignals wechselweise geöffnet und geschlossen werden kann, und
- eine Steuerungseinheit (7) zur Bereitstellung des pulsbreitenmodulierten Stellsignals am Schalter (6),
**gekennzeichnet dadurch,**
- **dass** die Schaltungsanordnung (20) Messpunkte (13, 15) zum Erfassen einer am Lüfter (3) anliegenden Lüfterspannung ($U_L$) umfasst; und
- **dass** die Steuerungseinheit (7) zur Berechnung der Einschaltzeiten ($t_{EIN}$) und Ausschaltzeiten ($t_{AUS}$) der an den Lüfter (3) angelegten Ausgangsspannung (Us) des Netzteils (1) als Funktion der erfassten Lüfterspannung ($U_L$) ausgebildet ist, so dass der Effektivwert des durch den Lüfter (3) fließenden Stroms geringer als ein Anlaufstrom des Lüfters (3) ist.

8. Schaltungsanordnung (10) nach Anspruch 7, umfassend einen parallel zu dem Lüfter (3) geschalteten Kondensator (2).

9. Schaltungsanordnung (10) nach einem der Ansprüche 7 und 8, umfassend eine in Reihe mit dem Lüfter (3) geschaltete Drossel (4) zur Begrenzung eines Stromanstiegs.

10. Schaltungsanordnung (10) nach Anspruch 9, umfassend eine Freilaufdiode (5), die so geschaltet ist, dass bei geöffnetem Schalter (6) die Drossel (4) den Strom über die Freilaufdiode (5), einen parallel zum Lüfter (3) geschalteten Kondensator (2) und/oder den Lüfter (3) weitertreiben kann.

11. Schaltungsanordnung (10) nach einem der Ansprüche 7 bis 10, umfassend einen in Reihe mit dem Lüfter (3) geschalteten Strommessshunt (8).

12. Gerät (9), vorzugsweise Schaltgerät, mit einem elektrischen Lüfter (3), welcher der Erzeugung eines das Gerät (9) kühlenden Luftstroms dient, und einem Netzteil (1), welches der Spannungsversorgung des Gerätes (9) dient, umfassend eine Schaltungsanordnung (10) nach einem der Ansprüche 7 bis 11, wobei der Lüfter (3) über die elektrischen Kontakte (10a, 10b) mit dem Netzteil (1) verbunden ist.

13. Gerät (9) nach Anspruch 12, wobei die Ausgangsspannung (Us) des Netzteils (1) eine Gleichspannung ist.

**Claims**

1. Method (100) for controlling a voltage ($U_L$) present at an electric fan (3) during a startup of the fan (3), wherein the fan (3) serves to generate a flow of air for cooling a device (9), comprising the following steps:

- Application (101) of an output voltage ($U_s$) of a power supply (1), which serves as the power supply of the device (9), to the fan (3); and
- Switching on and switching off (102) of the output voltage ($U_s$) of the power supply (1) applied to the fan (3) by a switch (6) pulse-width-modulated-controlled by means of a control unit (7),

**characterised by** the following steps:

- Acquisition of a fan voltage ($U_L$) present at the fan (3); and
- Calculation of the switch-on ($t_{ON}$) and switch-off times ($T_{OFF}$) of the output voltage ($U_s$) of the power supply (1) applied to the fan (3) as a function of the acquired fan voltage ($U_L$), so that the RMS value of the current flowing through the fan (3) is lower than or equal to a rated current ($I_n$) of the fan.

2. Method according to claim 1, wherein a maximum value of the current flowing through the fan (3) is less than or equal to twice the rated current ($I_n$) of the fan (3).

3. Method according to one of the preceding claims, comprising:

- Connection of a capacitor (2) in parallel with the fan (3) for stabilising the fan voltage ($U_L$).

**4.** Method according to one of the preceding claims, comprising:

- Connection of a choke (4) limiting an increase in current so that the fan current flowing through the fan (3) also flows through the choke (4) and the closed switch (6).

**5.** Method according to one of the preceding claims, comprising:

- Connection of a current measurement shunt (8) so that the fan current flowing through the fan (3) also flows through the current measurement shunt (8).

**6.** Computer program product (80), which is able to be executed in a control unit (7), **characterised in that** the computer program product (80) is embodied for carrying out a method according to one of claims 1 to 5.

**7.** Circuit arrangement (20) for supplying power to an electric fan (3), which serves to generate a flow of air for cooling a device (9), comprising

- Electrical contacts (10a, 10b) for connection of the fan (3) to a power supply (1), which serves as the power supply of the device (9),
- A switch (6) connected in series with the fan (3) for switching on and switching off the fan current flowing through the fan (3), wherein the switch (6) can be opened and closed alternately by means of a pulse-width-modulated setting signal, and
- A control unit (7) for providing the pulse-width-modulated setting signal at the switch (6),
**characterised in that**

- the circuit arrangement (20) comprises measurement points (13, 15) for acquisition of a fan voltage ($U_L$) present at the fan (3); and
- the control unit (7) for calculation of the switch-on ($t_{ON}$) and switch-off times ($T_{OFF}$) of the output voltage ($U_s$) of the power supply (1) applied to the fan (3) as a function of the acquired fan voltage ($U_L$) is embodied, so that the RMS value of the current flowing through the fan (3) is lower than a startup current of the fan (3).

**8.** Circuit arrangement (10) according to claim 7, comprising a capacitor (2) connected in parallel with the fan (3).

**9.** Circuit arrangement (10) according to one of claims 7 and 8, comprising a choke (4) connected in series with the fan (3) for limiting an increase in current.

**10.** Circuit arrangement (10) according to claim 9, comprising a flyback diode (5), which is switched so that, when the switch (6) is opened, the choke (4) can continue to drive the current via the flyback diode (5), a capacitor (2) connected in parallel with the fan (3) and/or the fan (3).

**11.** Circuit arrangement (10) according to one of claims 7 to 10, comprising a current measurement shunt (8) connected in series with the fan (3).

**12.** Device (9), preferably a switching device, with an electric fan (3), which serves to generate a flow of air for cooling the device (9), and a power supply (1), which serves as the power supply of the device (9), comprising a circuit arrangement (10) according to one of claims 7 to 11, wherein the fan (3) is connected via the electrical contacts (10a, 10b) to the power supply (1).

**13.** Device (9) according to claim 12, wherein the output voltage ($U_s$) of the power supply (1) is a dc voltage.

**Revendications**

**1.** Procédé (100) de commande d'une tension ($U_L$) appliquée à un ventilateur (3) électrique pendant une mise en marche du ventilateur (3), le ventilateur (3) servant à la production d'un courant d'air refroidissant un appareil (8), comprenant les stades suivants :

- application (101) au ventilateur (3) d'une tension ($U_s$) de sortie d'une partie (1) de réseau, qui sert à l'alimentation en tension de l'appareil (9) ; et

- application et interruption (102) de la tension ($U_s$) de sortie, appliquée au ventilateur (3), de la partie (1) du réseau par un interrupteur (6) commandé en modulation en largeur d'impulsion au moyen d'une unité (7) de commande, **caractérisé par** les stades suivants :

- relevé d'une tension ($U_L$) de ventilateur appliquée au ventilateur (3) ; et

- calcul des temps ($t_{EIN}$) d'application et des temps ($t_{AUS}$) d'interruption de la tension ($U_s$) de sortie, appliquée au ventilateur (3), de la partie (1) du réseau comme fonction de la tension ($U_L$) relevée du ventilateur, de manière à ce que la valeur effective du courant passant dans le ventilateur (3) soit inférieure ou égale à un courant ($I_n$) nominal du ventilateur (3).

2.  Procédé suivant la revendication 1, dans lequel une valeur maximum du courant passant dans le ventilateur (3) est inférieure ou égale à deux fois le courant ($I_n$) nominal du ventilateur (3).

3.  Procédé suivant l'une des revendications précédentes, comprenant :

    - la connexion d'un condensateur (2) en parallèle au ventilateur (4) pour stabiliser la tension ($U_L$) du ventilateur (3).

4.  Procédé suivant l'une des revendications précédentes, comprenant :

    - la connexion d'une bobine (4) de self limitant une élévation du courant, de manière à ce que le courant passant dans le ventilateur (3) passe aussi dans la bobine (4) de self et dans l'interrupteur (6) fermé.

5.  Procédé suivant l'une des revendications précédentes, comprenant :

    - le raccordement d'un shunt (8) de mesure du courant, de manière à ce que le courant passant dans le ventilateur (3) passe aussi dans le shunt (8) de mesure du courant.

6.  Produit (80) de programme d'ordinateur, qui peut être réalisé dans une unité (7) de commande, **caractérisé en ce que** le produit (80) de programme d'ordinateur est constitué pour effectuer un procédé suivant l'une des revendications 1 à 5.

7.  Montage (20) d'alimentation en courant d'un ventilateur (3) électrique, qui sert à produire un courant d'air refroidissant un appareil (9), comprenant

    - des contacts (10a, 10b) électriques pour connecter le ventilateur (3) à une partie (1) de réseau, qui sert à l'alimentation en tension de l'appareil (9),

    - un interrupteur (6) monté en série avec le ventilateur (3) pour appliquer et interrompre le courant passant dans le ventilateur (3), l'interrupteur (6) pouvant être en alternance ouvert et fermé au moyen d'un signal de réglage à modulation en largeur d'impulsion, et

    - une unité (7) de commande pour la mise à disposition de l'interrupteur (6) du signal de réglage modulé en largeur d'impulsion,

    **caractérisé**

    **en ce que** le montage (20) comprend des points (13, 15) de mesure pour relever une tension ($U_L$) s'appliquant au ventilateur (3), et

    - **en ce que** l'unité (7) de commande est constituée pour le calcul des temps ($t_{EIN}$) d'application et des temps ($t_{AUS}$) d'interruption de la tension ($U_s$) de sortie, appliqués au ventilateur (3), de la partie (1) du réseau comme fonction de la tension ($U_L$) relevée du ventilateur, de manière à ce que la valeur effective du courant passant dans le ventilateur (3) soit plus petite qu'un courant de mise en route du ventilateur (3).

8.  Montage (10) suivant la revendication 7, comprenant un condensateur (2) monté en parallèle au ventilateur (3).

9.  Montage (10) suivant l'une des revendications 7 et 8, comprenant une bobine (4) de self montée en série avec le ventilateur (3) pour limiter une augmentation du courant.

10. Montage (10) suivant la revendication 9, comprenant une diode (5) de roue libre, qui est montée de manière à ce que, lorsque l'interrupteur (6) est ouvert, la bobine (4) de self puisse continuer à acheminer le courant par la diode (5) de roue libre à un condensateur (2) monté en parallèle au ventilateur (3) et/ou au ventilateur (3).

**11.** Montage (10) suivant l'une des revendications 7 à 10, comprenant un shunt (8) de mesure du courant, monté en série avec le ventilateur (3).

**12.** Appareil (9), de préférence appareil de commutation, comprenant un ventilateur (3) électrique, qui sert à la production d'un courant d'air refroidissent l'appareil (9), et une partie (1) de réseau, qui sert à l'alimentation en tension de l'appareil (9), comprenant un montage (10) suivant l'une des revendications 7 à 11, le ventilateur (3) étant connecté à la partie (1) de réseau par les contacts (10a, 10b) électriques.

**13.** Appareil (9) suivant la revendication 12, dans lequel la tension ($U_s$) de sortie de la partie (1) de réseau est une tension continue.

FIG 1

FIG 2

FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004017292 A1

- US 6979964 B